# EUROPÄISCHE PATENTSCHRIFT

(11) **EP 2 185 623 B1**
(45) Veröffentlichungstag und Bekanntmachung des Hinweises auf die Patenterteilung: **10.11.2010**
(21) Anmeldenummer: 08801696.9
(22) Anmeldetag: 25.08.2008
(51) Int. Cl.: C08G 63/08, B01D 3/00

(54) **VERFAHREN ZUR ABTRENNUNG VON DILACTID AUS STOFFGEMISCHEN SOWIE VERWENDUNG**
METHOD FOR SEPARATING DILACTIDE FROM SUBSTANCE MIXTURES AND USE THEREOF
PROCÉDÉ POUR SÉPARER DU DILACTIDE CONTENU DANS DES MÉLANGES DE SUBSTANCES ET UTILISATION CORRESPONDANTE

(30) Priorität: 03.09.2007 EP 07017237
(43) Veröffentlichungstag der Anmeldung: 19.05.2010
(73) Patentinhaber: Uhde Inventa-Fischer GmbH, 13509 Berlin (DE)
(72) Erfinder: HAGEN, Rainer, 13465 Berlin (DE); MÜHLBAUER, Udo, 10119 Berlin (DE)
(74) Vertreter: Pfenning, Meinig & Partner GbR
(86) Internationale Anmeldenummer: PCT/EP2008/006965
(87) Internationale Veröffentlichungsnummer: WO 2009/030395

(56) Entgegenhaltungen:
- EP-A- 0 893 462
- WO-A-93/18020
- WO-A-95/09879
- WO-A-2005/056509
- US-A- 5 236 560

## Beschreibung

Vorliegende Erfindung beschreibt eine Vorrichtung zur Abtrennung eines bioabbaubaren, intermolekularen cyclischen Diesters einer alpha-Hydroxycarbonsäure aus Stoffgemischen, die zusätzlich die dazu korrespondierende alpha-Hydroxycarbonsäure des Diesters enthalten. Insbesondere ist der Diester dabei Dilactid und die Säure Milchsäure. Die Erfindung betrifft ein Verfahren zur Abtrennung von Dilactid aus Stoffgemischen, das auf einem modifizierten, destillativen Verfahren beruht. Daneben beschreibt die vorliegende Erfindung eine Polymerisationsvorrichtung, insbesondere zur Darstellung von Polylactid. Ebenso werden Verwendungszwecke sowohl der Vorrichtungen als auch des Verfahrens angegeben.

Bei der Herstellung von Polylactid ist die Reinheit des Monomeren, des Dilactids, eine wichtige Größe. Sie bestimmt das erreichbare Molekulargewicht und somit die mechanischen Eigenschaften des Polymeren. Das Monomere entsteht bei der Depolymerisation eines Milchsäure-Präpolymers und enthält normalerweise folgende Verunreinigungen: Wasser, Milchsäure, Lactoylmilchsäure und Oligomere der Milchsäure. Die Reinigung des Monomeren kann durch Kristallisation oder durch Rektifikation erfolgen. Beispielsweise beschreiben die DE 69 507 957 sowie die EP 1 136 480 die Reinigung von Dilactid durch Kristallisation. Dabei ist nachteilig, dass durch einmalige Kristallisation das Dilactid in nur unzulänglicher Reinheit erhalten wird. Durch mehrere Kristallisationsstufen wird zwar die gewünschte Reinheit erhalten, allerdings ist dies mit hohem Aufwand und Kosten verbunden.

Ebenso ist die Reinigung durch Rektifikation beispielsweise aus der EP 623 153, US 5,236,560 oder WO 2005/056509 bekannt. Nachteilig bei den bekannten Rektifikationsverfahren ist dabei, dass stets ein System aus zwei Rektifikationskolonnen verwendet werden muss, die in ihrem Ergebnis noch unbefriedigend sind. In der ersten Kolonne werden dabei die Leichtsieder (Wasser und Milchsäure) über Kopf destilliert, im Sumpf erhält man Dilactid und Oligomere. In der zweiten Kolonne fallen Dilactid als gereinigtes Kopfprodukt und im Sumpf die Oligomere an.

Als Alternative zum 2-Kolonnensystem wird eine Rektifikationskolonne mit einer Seitenentnahme beschrieben (US 5,236,560), wodurch die benötigte Reinheit bereits mit einer Kolonne erzielt wird. Nachteil dieser Ausführung ist, dass der Seitenstrom dampfförmig abgezogen werden muss, was in der Praxis schwierig zu realisieren ist.

Milchsäure ist eine optisch aktive Substanz und tritt in der L(+)- und D(-)-Form auf. Der cyclische Diester existiert somit in drei enantiomeren Formen: L,L-Dilactid (L-Dilactid), D,D-Dilactid (D-Dilactid) und L,D-Dilactid (Meso-Dilactid). L-Dilactid und D-Dilactid haben bis auf die optische Aktivität identische Eigenschaften. Meso-Lactid ist eine optisch inaktive Substanz mit einem niedrigeren Schmelz- und Siedepunkt als L- bzw. D-Dilactid. Meso-Lactid kann somit ebenso sowohl durch Rektifikation als auch durch Kristallisation von L- bzw. D-Dilactid getrennt werden. Die nachfolgend beschriebenen Reinigungsmethoden für L-Lactid können ohne technische Veränderung auch für D-Lactid benutzt werden.

Aufgabe vorliegender Erfindung ist somit, eine Vorrichtung bzw. ein Verfahren anzugeben, mit dem eine möglichst effiziente und einfache Abtrennung von Dilactid aus Stoffgemischen erreicht werden kann, wobei das Dilactid in möglichst hoher stofflicher Reinheit und/oder optischer Reinheit erhalten werden kann.

Gegenstand der Erfindung sind Verfahren gemäß den Ansprüchen 1-15, Verfahren gemäß den Ansprüchen 16 und 17, sowie die Verwendung gemäß Anspruch 18.

Die jeweils abhängigen Ansprüche stellen dabei vorteilhafte Weiterbildungen dar.

Erfindungsgemäß wird eine Reinigungsvorrichtung zur Abtrennung eines bioabbaubaren, intermolekularen cyclischen Diesters einer alpha-Hydroxycarbonsäure der Formel I eingesetzet, 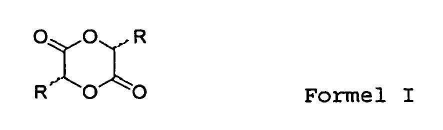 wobei R ausgewählt ist aus Wasserstoff oder linearen oder verzweigten aliphatischen Resten mit 1 bis 6 Kohlenstoffatomen, aus Stoffgemischen, enthaltend den Diester der Formel I sowie die dazu korrespondierende alpha-Hydroxycarbonsäure der Formel II, 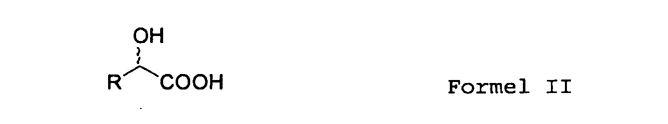 die mindestens folgende räumlich untereinander angeordnete Bestandteile umfasst:
a) kopfseitig mindestens einen Dephlegmator sowie mindestens einen Abzug,
b) mindestens ein den Durchmesser der Vorrichtung zumindest teilweise ausfüllendes Stoffaustauschpaket (Packung),
c) eine Trennwandkolonne, die durch eine vertikale Trennwand in zwei Zonen geteilt ist (Rektifikationskolonne), wobei jede Zone mindestens zwei Stoffaustauschpakete (Packungen) aufweist, die jeweils durch einen Zwischenraum voneinander getrennt sind, die erste Zone (Vorfraktionierungszone) mindestens einen Zugang zur Einspeisung des Stoffgemisches und die zweite Zone (Hauptfraktionierungszone) mindestens einen Seitenabzug zur Entnahme des gereinigten Produktes aufweist, und der mindestens eine Zugang sowie der mindestens eine Seitenabzug je im Bereich des mindestens einen Zwischenraumes angeordnet sind,
d) mindestens ein weiteres, den Durchmesser der Vorrichtung zumindest teilweise ausfüllendes Stoffaustauschpaket (Packung),
e) sumpfseitig, mindestens einen Verdampfer sowie mindestens einen Abzug,
wobei das Längenverhältnis der Trennwandkolonne zur Gesamtlänge der Vorrichtung 0,5 bis 0,9 beträgt.

Dabei sind die Stoffaustauschpakete (Packungen), die in der Reinigungsvorrichtung vorhanden sind, ausgewählt aus Mitteln, die eine hohe Oberfläche aufweisen und somit eine gute Verdampfung der durchströmenden Flüssigkeiten gewährleisten. Insbesondere kommen hierzu z.B. Raschig- und/oder Pallringe, Sättel, wie z.B. Berl-Sattel, Kugeln, Hacketten, Top-Packs oder Packungen aus Gewebe in Frage. Bevorzugt sind Packungen aus Drahtgewebe wegen der größeren Trennleistung und des geringen Druckverlustes. Durch die große Oberfläche ist ebenso gewährleistet, dass die Reinigungsvorrichtung sehr viele theoretische Böden aufweist und damit eine hohe Trennleistung auch von Substanzen mit sehr eng beieinander liegenden Siedepunkten aufweist.

Die Trennwand, die die Trennwandkolonne in eine Vorfraktionierungszone und eine Hauptfraktionierungszone teilt, kann dabei symmetrisch verlaufen, d.h. dass beide Zonen das gleiche Volumen aufweisen, aber auch so, dass eine der beiden Zonen ein größeres Volumen als die andere Zone einnimmt, also eine asymmetrische Aufteilung. Die asymmetrische Aufteilung der Trennwand kann auch dergestalt sein, dass die Trennwand eine Schräge aufweist und sich damit das Verhältnis der beiden Rektifikationszonen über die Länge der Trennwandkolonne zueinander ändert.

In einer vorteilhaften Ausführungsform weist die Reinigungsvorrichtung jeweils zwischen den mit a) bis e) bezeichneten Bestandteilen Zwischenräume auf, d.h. die Bauteile sind nicht direkt aneinander anschließend zusammengebaut. Dabei besteht die Möglichkeit, in jedem Zwischenraum der Reinigungsvorrichtung Vorrichtungen zum Sammeln der über die Packungen herabrieselnden Flüssigkeit sowie zur Neuverteilung der Flüssigkeit über den Packungsquerschnitt anzuordnen. Diese Vorrichtungen erlauben es, Seitenabzüge für die Flüssigkeit oder die Dämpfe anzubringen, über die die Entnahme eines gereinigten Produktes erfolgen kann.

Der sumpfseitig angeordnete Verdampfer ist dabei bevorzugt ein Fallfilmverdampfer. Durch einen Fallfilmverdampfer wird erreicht, dass eine möglichst große Oberfläche des zu verdampfenden Stoffgemisches erreicht wird, was sich insbesondere bei der Handhabung von thermisch sensitiven Produkten als vorteilhaft erweist. Dies ermöglicht eine nachhaltige Verringerung der Verweilzeit des Stoffgemisches im Sumpf.

Die Trennwandkolonne der Reinigungsvorrichtung kann in verschiedenen vorteilhaften Ausführungsformen ausgestaltet sein. So ist es beispielsweise möglich, dass die Hauptfraktionierungszone zwei Stoffaustauschpakete aufweist, die durch einen Zwischenraum getrennt sind und in Höhe dieses Zwischenraumes ein oder mehrere Seitenabzüge angeordnet sind.

Alternativ hierzu ist es jedoch auch möglich, dass die Hauptfraktionierungszone der Trennwandkolonne drei Stoffaustauschpakete aufweist, wobei diese jeweils durch einen Zwischenraum getrennt sind. Hierbei ist sowohl die Ausführungsform denkbar, dass beide Zwischenräume jeweils mindestens einen Seitenabzug aufweisen, als auch die Ausführungsform, dass nur einer der beiden Zwischenräume, beispielsweise entweder der obere, oder der untere Zwischenraum, einen oder mehrere Seitenabzüge aufweist.

Um auch eine Anreicherung oder Reindarstellung der optischen Isomeren des Diesters zu ermöglichen, ist es vorteilhaft, wenn sich im Anschluss an mindestens einen der Seitenabzüge der Reinigungsvorrichtung mindestens eine weitere Reinigungsvorrichtung anschließt. Dies kann beispielsweise eine Rektifikations- und/oder Kristallisationsvorrichtung sein, ebenso ist jedoch eine weitere, gemäß dem Anspruch 1 ausgestaltete Reinigungsvorrichtung als nachgeschaltete Reinigungsvorrichtung denkbar. Diese Möglichkeit ist in Anspruch 16 und der Fig. 8 dargestellt. Prinzipiell ist die Anordnung der weiteren Reinigungsvorrichtungen dabei an jedem Seitenabzug der Reinigungsvorrichtung möglich. Dabei sind Ausführungsformen denkbar, dass lediglich eine weitere Reinigungsvorrichtung oder auch mehrere weitere Reinigungsvorrichtungen vorhanden sind. Insbesondere ist es dabei bevorzugt, dass sich an einen oder mehreren der Seitenabzüge der Trennwandkolonne die weitere Reinigungsvorrichtung anschließt. Ebenso ist es jedoch vorteilhaft, wenn sich die weitere Reinigungsvorrichtung, insbesondere eine Rektifikationsvorrichtung, direkt oberhalb der Trennwand über einen Seitenabzug, der im Zwischenraum zwischen der Trennwand und der darüber angeordneten Packung angebracht ist, an die Reinigungsvorrichtung anschließt.

Die weiteren Reinigungsvorrichtungen, insbesondere die Rektifikations-, Kristallisationsvorrichtungen, oder die weitere, eine Trennwandkolonne umfassende Reinigungsvorrichtung sind dabei vorteilhafterweise über eine Rückführung mit dem Zugang der Trennwandkolonne verbunden. Somit wird gewährleistet, dass möglichst wenig des ursprünglich eingesetzten Stoffgemisches während des Trennprozesses verloren geht. Im Falle, dass die weitere Reinigungsvorrichtung eine Rektifikationskolonne ist, wird bevorzugt das Sumpfprodukt dieser Kolonne zurückgeführt.

Ebenso ist es jedoch vorteilhaft möglich, dass vor dem Zugang der Reinigungsvorrichtung mindestens eine weitere Reinigungsvorrichtung vorgeschaltet ist. Diese weitere Reinigungsvorrichtung kann ebenso eine Rektifikations- und/oder Kristallisationsvorrichtung darstellen. Durch diese Ausführungsform wird die Trennleistung der gesamten Reinigungsvorrichtung gemäß Anspruch 1 weiter verbessert.

Weiterhin ist somit eine bevorzugte Ausführungsform der Reinigungsvorrichtung denkbar, bei der der die Trennwandkolonne umfassende Reinigungsvorrichtung sowohl eine weitere Reinigungsvorrichtung vor- und nachgeschaltet ist.

Die zuvor genannten Ausführungsformen, bei denen zusätzlich zu der ersten, eine Trennwandkolonne umfassenden Reinigungsvorrichtung noch weitere Reinigungsvorrichtungen entweder vor- und/oder nachgeschaltet sind, ermöglichen insbesondere bei eingesetzten Roh-Dilactid-Fraktionen, die gereinigt werden sollen, optimale Ausbeuten an meso-Lactid-optimierten Fraktionen. So ist es möglich, Fraktionen mit einem meso-Lactid-Gehalt von größer 90 % herzustellen, bei einer gleichzeitigen freien Säuregruppen-Konzentration unterhalb von 10 mmol/kg. Weiter ist es möglich, Fraktionen mit einem L-Dilactid-Gehalt zwischen 90 und 100 % herzustellen.

Erfindungsgemäß wird eine Polymerisationsvorrichtung zur Polymerisation eines bioabbaubaren, intermolekularen cyclischen Diesters einer alpha-Hydroxycarbonsäure der Formel I eingesetzt, 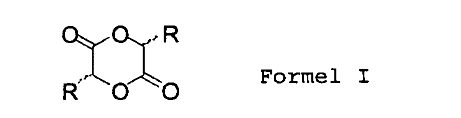 wobei R ausgewählt ist aus Wasserstoff oder linearen oder verzweigten aliphatischen Resten mit 1 bis 6 Kohlenstoffatomen bzw. bevorzugt Dilactid ist, wobei eine voranstehend beschriebene Reinigungsvorrichtung umfasst ist.

Der Reinigungsvorrichtung kann in der Polymerisationsvorrichtung bevorzugt ein Polymerisationsreaktor, der insbesondere zweistufig ausgebildet ist und einen Rührkessel sowie im Anschluss daran mindestens einen Rohrreaktor aufweist, nachgeschaltet sein. In einer derartigen Variante findet somit eine direkte Weiterverarbeitung des gereinigten Dilactids statt. Alternativ hierzu ist es jedoch ebenso möglich, das Dilactid bis zur Polymerisation in flüssiger Form zu lagern.

Ebenso ist es in dieser Ausführungsform dabei bevorzugt, wenn in der Polymerisationsvorrichtung der Reinigungsvorrichtung eine Kondensationsvorrichtung zur Kondensation der Dämpfe aus dem Kopf der Rektifikationskolonnen (Dephlegmator) nachgeschaltet ist. Unter einer Kondensationsvorrichtung wird dabei eine Vorrichtung verstanden, in der die Dämpfe aus der Rektifikationskolonne im Gegenstrom durch direkten Kontakt mit einer Waschflüssigkeit kondensiert werden. Als Kondensations- oder Waschflüssigkeit wird eine wässrige Lösung der Säure der Formel II verwendet. Als weitere Bestandteile können in diesen Stoffgemischen noch Wasser und/oder Di- oder Oligomere der Säure der Formel II enthalten sein.

Gegenstand der Erfindung ist ein Verfahren zur zumindest teilweisen Abtrennung eines bioabbaubaren, intermolekularen cyclischen Diesters einer alpha-Hydroxycarbonsäure der Formel I bereitgestellt, 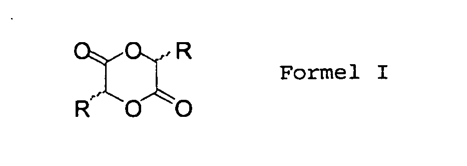 wobei R ausgewählt ist aus Wasserstoff oder linearen oder verzweigten aliphatischen Resten mit 1 bis 6 Kohlenstoffatomen, aus Stoffgemischen, enthaltend den Diester der Formel I sowie die dazu korrespondierende alpha-Hydroxycarbonsäure der Formel II 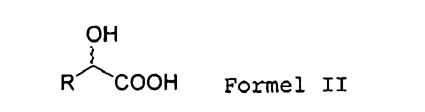 durch folgende Schritte:
a) Einspeisen des Stoffgemisches in eine eine Trennwandkolonne aufweisende Reinigungsvorrichtung, wobei die Reinigungsvorrichtung mindestens einen Seitenabzug aufweist,
b) Auftrennen des Stoffgemisches, wobei die Säure der Formel II in dampfförmigem Aggregatzustand anfällt und
c) Entnahme des gereinigten Diesters der Formel I über den mindestens einen Seitenabzug.

Bei der Reinigungsvorrichtung handelt es sich um eine Reinigungsvorrichtung wie vorab beschrieben.

Unter zumindest teilweiser Abtrennung wird dabei verstanden, dass der Diester der Formel I dabei zumindest teilweise aus dem Stoffgemisch abgetrennt wird.

Der Diester wird nach der erfolgten Abtrennung bevorzugt in flüssigem Aggregatszustand entnommen.

Milchsäure sowie ihre linearen Oligomere und Polymere besitzen pro Molekül eine Hydroxyl- und eine Carboxylendgruppe. Da die Carboxylendgruppen analytisch einfacher zu bestimmen sind (Säure-Base-Titration), wird die Reinheit des Dilactids als Carboxylendgruppenkonzentration angegeben.

Erfindungsgemäß lässt sich mit dem Verfahren der Diester der Formel I in einer sehr hohen Reinheit erhalten. Dabei beträgt bevorzugt die Konzentration freier Carbonsäuregruppen (Carboxylendgruppen) maximal 50 mmol/kg, bevorzugt maximal 30 mmol/kg, weiter bevorzugt maximal 20 mmol/kg, besonders bevorzugt 10 mmol/kg.

In dem Stoffgemisch können ebenso weitere Stoffe, ausgewählt aus der Gruppe bestehend aus Wasser, korrespondierenden Oligomeren der alpha-Hydroxycarbonsäure der Formel III, 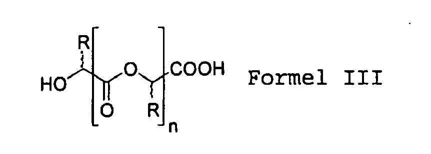 wobei n = 1 bis 10 ist und R wie bei den Formeln I und II definiert ist und/oder Mischungen hieraus, enthalten sein.

Das Verfahren gewährleistet ebenso, dass die alpha-Hydroxycarbonsäure der Formel II sowie Wasser als Kopfprodukt und die Oligomeren der alpha-Hydroxycarbonsäure der Formel III als Sumpfprodukt abgezogen werden.

Erfindungsgemäß kann das Stoffgemisch der Trennwandkolonne in dampfförmigem oder flüssigem Aggregatzustand oder als zweiphasiges Gemisch zugeführt werden.

Um das Verfahren möglichst effizient zu führen, ist es bevorzugt, wenn der Gewichtsanteil des cyclischen Diesters der Formel I in dem der Reinigungsvorrichtung zugeführten Stoffgemisch mindestens 50 Gew.-%, bevorzugt mindestens 75 Gew.-%, besonders bevorzugt mindestens 80 Gew.-% beträgt.

Die Reinigungsvorrichtung wird dabei bevorzugt bei Drücken kleiner 120 mbar, bevorzugt kleiner 100 mbar betrieben.

Die Aufgabe des Stoffgemisches in die Trennwandkolonne erfolgt bei einer Temperatur zwischen 90 °C und 210 °C, bevorzugt zwischen 110 °C und 140 °C. Insbesondere ist der cyclische Diester der Formel I dabei Dilactid und die alpha-Hydroxycarbonsäure der Formel II Milchsäure.

Da es essentiell ist, dass das L-Dilactid in einer hohen Reinheit erhalten wird, erfolgt nach Entnahme des Dilactids in einer vorteilhaften Ausführungsform mindestens ein weiterer Trennungsschritt. Dies dient insbesondere zur zumindest teilweisen Separation von L- und Meso-Dilactid.

Hierbei sind verschiedene Ausführungsformen denkbar, bevorzugt wird hierbei jedoch Rektifikation und/oder Kristallisation angewandt. Vorteilhaft ist ebenso, wenn das der Reinigungsvorrichtung entnommene vorgereinigte Stoffgemisch einer weiteren gemäß Anspruch 1 ausgebildeten und somit eine weitere Trennwandkolonne aufweisenden Reinigungsvorrichtung zugeführt wird, in der die Abtrennung von COOH-Gruppen-haltigen Verunreinigungen und/ oder von optischen Isomeren fortgesetzt und verstärkt wird.

Alternativ hierzu ist es jedoch auch möglich, dass bereits in der Trennwandkolonne gleichzeitig eine effiziente stoffliche Auftrennung (d.h. Abtrennung des Dilactids von den restlichen Bestandteilen des Stoffgemisches) sowie eine Auftrennung der Stereoisomeren des Dilactids erfolgt. Hierzu ist insbesondere eine Ausführungsform vorgesehen, in der die Trennwandkolonne mindestens zwei Seitenabzüge aufweist, wobei der erste Seitenabzug bezüglich des weiteren Seitenabzugs an der Reinigungsvorrichtung weiter kopfseitig angeordnet ist. Durch die Differenz der Siedepunkte von Meso-Dilactid und L-Dilactid wird es somit ermöglicht, dass weiter kopfseitig eine Meso-Dilactid-reiche Fraktion sowie weiter sumpfseitig eine L-Dilactid-reiche Fraktion entnommen werden kann. Das Verfahren ist dabei derart effizient, dass der Gehalt des Meso-Dilactids in der L-Dilactid-reichen Fraktion maximal 10 Gew.-%, bevorzugt maximal 6 Gew.-%, besonders bevorzugt maximal 4 Gew.-%, bzw. der Gehalt des L-Dilactids in der Meso-Dilactid-reichen Fraktion maximal 60 Gew.-%, bevorzugt maximal 50 Gew.-%, besonders bevorzugt maximal 40 Gew.-% beträgt.

In einer weiteren vorteilhaften Ausführungsform kann der Gehalt des Meso-Dilactids in der aus der Reinigungsvorrichtung entnommenen L-Dilactid-reichen Fraktion durch anschließende Kristallisation weiter verringert werden.

Ebenso ist es ökonomisch, wenn die bei diesem Kristallisationsprozess anfallende Meso-Dilactid-reiche Fraktion dem Stoffgemisch, das in die Trennwandkolonne eingespeist wird, wieder zugesetzt wird.

In einer weiteren vorteilhaften Ausführungsform wird der Gehalt des L-Dilactids in der an der Trennwandkolonne (5) weiter kopfseitig entnommenen Meso-Dilactid-reichen Fraktion durch anschließende Rektifikation weiter verringert. Gleichzeitig wird der Meso-Dilactid-Gehalt der Fraktion erhöht und die Carboxylgruppenkonzentration verringert. Dabei beträgt bevorzugt die Carboxylgruppenkonzentration maximal 20 mmol/kg, weiter bevorzugt maximal 10 mmol/kg, besonders bevorzugt maximal 5 mmol/kg, insbesondere maximal 2 mmol/kg. Der Anteil an Meso-Dilactid beträgt bevorzugt mehr als 70 Gew.-%, besonders bevorzugt mehr als 80 Gew.-% und insbesondere mehr als 90 Gew.-%. In Analogie zu Voranstehendem ist es genauso bevorzugt, die bei der Rektifikation erhaltene L-Dilactid-reiche Fraktion dem Stoffgemisch, das in die Trennwandkolonne eingespeist wird, wieder zuzusetzen.

In einer bevorzugten Ausführungsform entstammt das ursprünglich in die Trennwandkolonne eingesetzte Stoffgemisch aus einer vorgeschalteten Kondensationsvorrichtung und/oder Kristallisationsvorrichtung.

Das Verfahren eignet sich insbesondere zum Betreiben einer eingangs beschriebenen Reinigungsvorrichtung.

Die Reinigungsvorrichtung sowie das Verfahren finden Verwendung bei der Reinigung von Dilactid, zur Herstellung von im wesentlichen enantiomerenreinem L-Dilactid und/oder meso-Dilactid und/oder bei der Herstellung von Polylactid. Sowohl Vorrichtung als auch Verfahren eignen sich in gleicher Weise zur Herstellung von gereinigtem, im wesentlichen enantiomerenreinem D-Lactid und zur Herstellung von Poly-D-Lactid.

Bevorzugt eignet sich das Verfahren zur Herstellung von Polylactid mit einem meso-Lactidgehalt von mehr als 70 Gew.-%, ausgehend von einem Stoffgemisch enthaltend meso-Dilactid mit einer Polymerisationsvorrichtung, wie vorstehend beschrieben, bei dem zunächst in der Reinigungsvorrichtung eine kontinuierliche Abtrennung des meso-Dilactids aus dem Stoffgemisch mit kontinuierlicher Entnahme des gereinigten meso-Dilactids aus der Reinigungsvorrichtung erfolgt und im Anschluss eine Polymerisation in der Polymerisationsvorrichtung durchgeführt wird.

Dabei wird die Polymerisation bevorzugt so gesteuert, dass das erhaltene Poly-Meso-Lactid eine molare Masse von 50.000 g/mol < Mₙ < 2.000.000 g/mol aufweist.

Der meso-Lactid-Anteil des enstehenden Polylactids beträgt dabei bevorzugt mehr als 70 Gew.-%, bevorzugt mehr als 80 Gew.-%, insbesondere mehr als 90 Gew-%.

Vorliegende Erfindung wird anhand der beigefügten Figuren sowie der im Folgenden beschriebenen Beispiele näher beschrieben, ohne die Erfindung auf die dort genannten Parameter und Wertebereiche beschränken zu wollen.

Es zeigen
- Figur 1: eine Ausführungsform einer erfindungsgemäß eingesetzten Polymerisationsvorrichtung anhand eines Fließbildes einer typischen Verfahrensfüh- rung zur Herstellung von Polylactid, ausge- hend von Milchsäure,
- Figur 2: eine erfindungsgemäß eingesetzte Reinigungsvorrichtung mit einem Zugang und einem Seitenstrom, aus dem das gereinigte Dilactid entnommen wird,
- Figur 3: eine alternative Ausführung der Reinigungsvorrichtung, mit der gleichzeitig eine Reinigung von Dilactid sowie die Trennung in eine meso-Lactid- reiche und eine meso-Lactid-arme Fraktion möglich ist,
- Figur 4: eine alternative Ausführungsformen der Rei- nigungsvorrichtung gemäß Figur 3, wobei hier die Seitenabzüge auch außerhalb des Trennwandbereichs der Kolonne angeordnet sein können,
- Figur 5: eine Variante der Reinigungsvorrichtung, bei der nach stofflicher Reinigung von Di- lactid die Auftrennung von Meso- und L- Dilactid in einem separaten Prozessschritt (15) erfolgt,
- Figur 6: eine Ausführungsform der Reinigungsvorrichtung, wobei zur Verringe- rung des Gehaltes an L-Dilactid in der Me- so-Lactid-reichen Fraktion eine weitere Rektifikationskolonne (16) angeschlossen wird,
- Figur 7: eine Ausführungsform, bei der zur Optimierung des Reinheitsgrades so- wohl der Meso-Lactid-reichen Fraktion als auch der L-Lactid-reichen Fraktion eine Rektifikationskolonne (16) als auch eine Kristallisationsvorrichtung (18) vorhanden sind.
- Figur 8: eine weitere Ausführungsform der Reinigungsvorrichtung, der eine weitere, eine Trennwandkolonne (15) umfassende Reinigungsvorrichtung an einen Seitenabzug nachgeschaltet ist,
- Figur 9: eine weitere bevorzugte Ausführungsform der Reinigungsvorrichtung, der vor den Zugang in die Trennwandkolonne (5) eine weitere Vor-Reinigungsvorrichtung (15) vorgeschal- tet ist.

In Fig. 1 ist der kontinuierliche Gesamtprozess der Polylactidherstellung (PLA-Prozess) ausgehend von Milchsäure dargestellt. Der Prozess untergliedert sich dabei in die folgenden Teilschritte, die mit den in die Polymerisationsvorrichtung 100 integrierten, im Folgenden näher erläuterten Einzelbestandteilen ausgeführt werden. Die Polymerisationsvorrichtung 100 umfasst dabei eine erfindungsgemäß eingesetzte Reinigungsvorrichtung 1.

### 1. Aufkonzentration von Milchsäure

Das Ausgangsmaterial für den Prozess ist Milchsäure. Dabei muss der Gehalt an Milchsäure höher als 80 Gew.-% sein. Vorzugsweise beträgt dabei die Milchsäurekonzentration mehr als 90 %, weil das Wasser vor der Polymerisation entfernt werden muss. Die Trennung von Wasser und Milchsäure wird dabei in einer Rektifikationssäule 101 vorgenommen. Dabei wird über einen Absaugstutzen 103 Vakuum angelegt, das dampfförmig anfallende Wasser wird kondensiert und über einen weiteren Stutzen 104 kopfseitig entnommen. Die Zuführung der Milchsäure erfolgt dabei kontinuierlich über einen weiteren Stutzen 102. Das Destillat ist reines Wasser, das sumpfseitig anfallende Produkt ist Milchsäure mit einer Konzentration von mehr als 99 Gew.-%.

Neben der Abtrennung von Wasser aus dem Ursprungsmaterial (Milchsäure) dient die Rektifikationssäule 101 ebenso zur Trennung der Dämpfe aus den Präkondensations-Reaktoren 105a und 105b. Die Dampfströme bestehen dabei aus Milchsäure, Lactoylmilchsäure, Dilactid und Wasser. Das Wasser wird kopfseitig abgezogen, Milchsäure und ihre Derivate gehen in den Sumpf der Rektifikationssäule und von dort zusammen mit der aufkonzentrierten Milchsäure in den ersten Präkondensations-Reaktor 105a.

### 2. Präkondensation

Die aufkonzentrierte Milchsäure wird in einer Serie von zwei Reaktoren 105a und 105b durch Polykondensation in ein Präpolymer überführt. Die Polykondensation läuft unter zwei verschiedenen Drücken und Temperaturen ab, um den Reaktionsumsatz zu optimieren. Im ersten Reaktor 105a sind die Konditionen so gewählt, dass die Verdampfung von Milchsäure minimiert ist und gleichzeitig die Entfernung von Wasser erleichtert wird. Im zweiten Schritt der Polykondensation ist die Reaktionsgeschwindigkeit durch eine höhere Temperatur erhöht, gleichzeitig wird der Druck vermindert, um die Wasserkonzentration in der Schmelze weiter zu mindern. Die mittlere Molmasse (Zahlenmittel) des Präpolymers liegt dabei zwischen 500 und 2.000 g/mol.

### 3. Cyclisierende Depolymerisation

Das Präpolymer steht in chemischem Gleichgewicht mit dem cyclischen Dimer der Milchsäure, dem Dilactid. Durch Einstellung von Druck und Temperatur im Depolymerisationsreaktor 106 ist gewährleistet, dass das Lactid kontinuierlich aus dem Präpolymer gebildet wird und verdampft. Der Dampfstrom aus dem Depolymerisationsreaktor 106 besteht hauptsächlich aus Lactid. Wasser, Milchsäure und deren lineare Oligomere sind nur in untergeordneten Mengen vorhanden. Zum Depolmerisationsreaktor 106 gehört ein Kondensator, der die Reaktionsbrüden teilweise kondensiert: Wasser und der größte Anteil an Milchsäure bleiben dabei dampfförmig und werden in der Kondensationsvorrichtung 107 weitgehend kondensiert. Das Kondensat aus dem Depolymerisationsreaktor 106 enthält zuvorderst das Lactid, Lactoylmilchsäure (das lineare Dimer der Milchsäure) und höhere lineare Oligomere. Das Kondensat wird auch als Roh-Lactid bezeichnet. Lactid liegt in zwei stereoisomeren Formen vor: das optisch aktive L-Lactid und das Mesolactid, aus einer Kombination einer L(+)- und D(-)-Milchsäureeinheit. Die D(-)-Einheiten stammen teils aus dem Edukt, teils werden sie durch Racemisierung von L(+)-Einheiten während der Präpolymerisation und der Depolymerisation gebildet.

### 4. Lactid-Reinigung

Während der Ringöffnungspolymerisation hängt das erreichbare Molekulargewicht und somit bedeutende mechanische Eigenschaften des Polylactids vom Reinheitsgrad des Lactids ab. Die Hydroxyl-Gruppen der als Verunreinigung enthaltenen Milchsäure und Lactoylmilchsäure dienen dabei als Ausgangspunkt der Polymerisation. Je höher die Konzentration der Hydroxyl-Gruppen im Lactid ist, desto geringer fällt das erreichbare Molekulargewicht des Polymers aus. Die Konzentration der Hydroxyl-Gruppen im Rohlactid ist nach der cyclisierenden Depolymerisation zu hoch. Das kondensierte Lactid wird in einer Reinigungsvorrichtung 1 bis zur benötigten Hydroxylgruppenkonzentration aufgereinigt. Das gereinigte Lactid wird der Reinigungsvorrichtung 1 als Seitenstrom entnommen. Das Destillat und das Sumpfprodukt werden dem Prozess an unterschiedlichen Stellen wieder zugeführt. Neben dem Molekulargewicht des Polylactids werden seine Eigenschaften stark durch den D-Gehalt (die Menge an strukturellen Einheiten, die die D-Konfiguration aufweisen) beeinflusst.

### 5. Ringöffnungspolymerisation

Die Ringöffnungspolymerisation wird in einem Reaktor unternommen, der aus einer Kombination eines Rührkessels 109 und eines Rohrreaktors 110 gebildet ist. Im ersten Reaktor 109 wird das niedrigviskose Lactid zu PLA polymerisiert mit einer Umsetzungsrate von ca. 50 %. Katalysator und Additive werden homogen in die Schmelze eingemischt.

Im Rohreaktor 110 wird die Polymerisationsreaktion so lange fortgeführt, bis ein chemisches Gleichgewicht zwischen Polymer und Monomer erreicht wird. Die maximale Umsetzung des Monomers beträgt ca. 95 %. Während der Polymerisation erhöht sich die Viskosität auf ca. 10.000 Pa·s.

### 6. Entmonomerisierung

Um ein stabiles Polylactid zu erhalten, ist die Monomerkonzentration von ungefähr 5 Gew.-% in der Schmelze zu hoch. Deswegen muss eine Entmonomerisierung durchgeführt werden. Dies wird durch eine Entgasung der Schmelze z.B. in einem Doppelschneckenextruder 111 erreicht. Aufgrund der Tatsache, dass die Ringöffnungspolymerisation eine Gleichgewichtsreaktion ist, wird ein Stabilisator vor der Entmonomerisierung zugegeben, um die Rückbildung des Monomers während und nach der Entgasung zu verhindern.

### 7. Granulierung und Kristallisation

Anschließend an die Entmonomerisierung wird die Schmelze dem Extruder 111 entnommen und in ein Granulat 112 überführt. Dabei können sowohl Stranggranulation oder Unterwasser-Granulation durchgeführt werden. In beiden Fällen muss das PLA-Granulat vor der Trocknung und der Verpackung kristallisiert werden. Die Kristallisation wird bei erhöhten Temperaturen und unter Rühren durchgeführt, solange bis das Granulat nicht mehr aneinander klebt.

Figur 2 zeigt die einfachste Ausführungsform der Reinigungsvorrichtung 1. Diese weist, von der Kopfseite beginnend, folgende Bestandteile auf: einen Dephlegmator 2 zur Kondensation der aus der Trennwandbereich 5 kommenden Brüden, die zum größten Teil aus leichtflüchtigen Stoffen, wie beispielsweise Wasser oder Milchsäure, bestehen, kopfseitig angebracht einen Abzug 3 sowie an den Dephlegmator anschließend ein Stoffaustauschpaket 4, das gegebenenfalls noch vom Dephlegmator 2 über einen weiteren Zwischenraum (nicht abgebildet) getrennt sein kann. Unterhalb des Stoffaustauschpaketes 4 befindet sich ein Zwischenraum 10', woran sich der Trennwandbereich der Kolonne, der die Auftrennung des Stoffgemisches in nur einer Kolonne ermöglicht, anschließt. Die Trennwandkolonne weist eine vertikale Trennwand 6 auf und ist somit in zwei Zonen, nämlich die Vorfraktionierungszone 7 und die Hauptfraktionierungszone 8, aufgetrennt. Die beiden Zonen weisen jeweils zwei Stoffaustauschpakete 9 auf, die je durch Zwischenräume 10 voneinander getrennt sind. Die Vorfraktionierungszone 7 hat zur Zuführung des Stoffgemisches dabei einen Zugang 11, während die Hauptfraktionierungszone 8 zur Entnahme des gereinigten Dilactids einen Seitenabzug 12 aufweist. Unterhalb der Trennwandkolonne 5 befindet sich ein weiterer Zwischenraum 10' sowie ein weiteres Stoffaustauschpaket 13. Sumpfseitig ist ein Fallfilmverdampfer 14 angebracht, bevorzugt neben dem Sumpfbehälter bzw. der Vorrichtung 1. Der Fallfilmverdampfer 14 kann vom Stoffaustauschpaket 13 gegebenenfalls über einen weiteren Zwischenraum abgetrennt sein. Im Bereich des Fallfilmverdampfers 14 ist ebenso ein Abzug 3 zur Entfernung linearer Oligomere sowie Dilactid vorhanden. Der Fallfilmverdampfer 14 ist seitlich an den Kolonnenschuss montiert.

In Figur 3 ist eine ähnliche Ausführungsform wie in Figur 1 dargestellt, wobei der einzige Unterschied in der Ausführung der Trennwandkolonne 5 besteht. Im Unterschied zur Ausführungsform in Figur 2 weist hier die Hauptfraktionierungszone 8 drei Stoffaustauschpakete 9 auf, die jeweils durch einen Zwischenraum 10 voneinander getrennt sind. Jeder dieser Zwischenräume besitzt dabei einen Seitenabzug 12. Durch diese Ausführungsform der Trennwandkolonne 5 wird es ermöglicht, dass gleichzeitig eine stoffliche Auftrennung dergestalt erfolgt, dass die im eingehenden Stoffgemisch vorhandenen Komponenten, wie Milchsäure und Wasser kopfseitig, und die Oligomeren sumpfseitig abgezogen werden, während der Hauptanteil des Dilactids über die Seitenabzüge 12 entfernt werden kann. Gleichzeitig erfolgt dabei eine Auftrennung der Stereoisomeren, wobei die Meso-Dilactid-reiche Fraktion im oberen der beiden Seitenabzüge 12 und die L-Dilactid-reiche Fraktion über den unteren der beiden Seitenabzüge 12 entnommen werden kann, so dass simultan eine stoffliche Trennung der einzelnen Komponenten neben einer optischen Auftrennung der Lactid-Stereoisomeren erfolgt.

Dabei ist der obere Seitenabzug 12 nicht zwingendermaßen im Bereich der Trennwand 6 angeordnet, sondern kann auch, wie in Figur 4 dargestellt, an weiter oben angeordneten Zwischenräumen 10 der Reinigungsvorrichtung 1 angebracht sein. Ebenso ist die Möglichkeit gegeben, dass mehrere Seitenabzüge 12 an verschiedenen Positionen vorhanden sind.

In Figur 5 ist eine Ausführungsform dargestellt, bei der die Reinigungsvorrichtung 1 mit nur einem Seitenabzug 12 ausgeführt ist, woran sich eine weitere Reinigungsvorrichtung 15 anschließt. Diese Reinigungsvorrichtung 15 kann entweder eine Rektifikationskolonne 16 oder eine Kristallisationsvorrichtung 18 (vgl. Fig. 7) sein und dient der Abtrennung von L-Dilactid und Meso-Dilactid.

In Figur 6 ist eine Ausführungsform dargestellt, bei der über die Reinigungsvorrichtung 1 eine Auftrennung in eine Meso-Dilactid-reiche Fraktion und eine L-Dilactid-reiche Fraktion erfolgt, wobei die L-Dilactid-reiche Fraktion über einen weiter sumpfseitig, im Bereich der Trennwandkolonne 5 angeordneten Seitenabzug 12 abgezogen wird. Die Meso-Dilactid-reiche Fraktion, die am weiter kopfseitig angeordneten Seitenabzug 12 entnommen wird, wird zur Optimierung des Meso-Dilactid-Gehaltes in eine Rektifikationskolonne 16 eingespeist, wobei eine Meso-Dilactidoptimierte Fraktion mit einem Meso-Dilactid-Gehalt von > 90 % erhalten werden kann. Der Rektifikationskolonne wird dabei sumpfseitig ein L-Dilactid-reiches Gemisch mit einem L-Dilactid-Gehalt von > 80 % erhalten werden, das über eine Rückführung 17 zurück in die Zuführung 11 der Trennwandkolonne 5 eingespeist wird.

Figur 7 zeigt dabei eine Vorrichtungsform, wie sie auch schon in Figur 6 dargestellt ist, wobei zusätzlich noch eine Vorrichtung zur Schmelzekristallisation 18 vorhanden ist, um den L-Dilactid-Gehalt der L-Dilactid-reichen Fraktion weiter zu erhöhen. Dabei wird L-Dilactid auskristallisiert; Meso-Dilactid verbleibt in der Schmelze und wird über eine Rückführungsleitung 17' der Zuführung 11 der Kolonne (1) zugeführt. Das somit erhaltene L-Dilactid weist einen L-Dilactid-Gehalt von > 99 % auf und eine Carboxylgruppenkonzentration von < 10 mmol/kg, und eignet sich somit zum direkten Einsatz zur Polymerisation und Herstellung von PLA.

Figur 8 zeigt eine Reinigungsvorrichtung, bei der zwei Reinigungsvorrichtungen, wie in Anspruch 1 beschrieben, hintereinander geschaltet sind. In dieser besonderen Ausführungsform stellt die linke, in Figur 8 dargestellte Reinigungsvorrichtung beispielsweise eine eine Trennwandkolonne umfassende Reinigungsvorrichtung gemäß Figur 3 dar, wobei hier die gleichen Bestandteile mit gleichen Bezugszeichen versehen sind. Das beispielsweise aus dem oberen Seitenabzug 12 entnommene gereinigte Stoffgemisch wird dabei einer weiteren eine Trennwandkolonne umfassenden Reinigungsvorrichtung 15 dargestellt, die in Figur 8 rechts dargestellt ist. Die entsprechenden Elemente der Reinigungsvorrichtung, die auch an der weiteren Reinigungsvorrichtung 15 vorgesehen sind, sind hierbei mit den analogen Bezugszeichen 2a bis 14a versehen. Diese weitere Reinigungsvorrichtung 15 weist beispielsweise einen Seitenabzug 19 auf, über den beispielsweise hochreines meso-Lactid entnommen werden kann. Zur Erhöhung der Effizienz und zur Gewährleistung eines kontinuierlichen Prozesses ist der sumpfseitig angeordnete Abzug der weiteren Reinigungsvorrichtung 15 über einen Ablauf 17" mit dem Zulauf 11 der ersten Reinigungsvorrichtung 1 verbunden.

Eine weitere Variante der Reinigungsvorrichtung ist in Figur 9 dargestellt. Hierbei ist der die Trennwandkolonne umfassenden Reinigungsvorrichtung 1 eine weitere Reinigungsvorrichtung 15 vorgeschaltet, die zur Vorreinigung des eingesetzten Eduktgemisches dient. Das Edukt (11a, Rohlactid) wird in der zusätzlichen Reinigungsvorrichtung aufgetrennt in eine L-Dilactid-reiche Fraktion 3' und eine meso-Dilactid-reiche Fraktion 11. Die meso-Dilactid-reiche Fraktion 11 besteht aus meso-Dilactid, L-Dilactid, Milchsäure und dessen lineare Oligomere und restliches Wasser. Diese Fraktion wird in der Reinigungsvorrichtung (1) aufgetrennt in ein dampfförmiges Kopfprodukt, ein flüssiges Seitenprodukt, das zu einem großen Prozentsatz aus meso-Dilactd besteht und dessen Carboxylgruppenkonzentrations sehr gering ist, und ein Sumpfprodukt, das sich aus Oligomeren und L-Dilactid zusammensetzt, getrennt.

Die L-Dilactid-reiche Fraktion 3' der zusätzlichen Reinigungsvorrichtung besitzt einen Gehalt an L-Dilactid von mehr als 98% und eine Carboxylgruppenkonzentration von weniger als 10 mmol/kg. Die weitere Reinigungsvorrichtung ist dabei in besonders bevorzugter Ausgestaltung eine Kristallisationsvorrichtung.

Die Reinigungsvorrichtung (15) kann anstelle von L-Lactid auch zur Vortrennung von D-Lactid und meos-Lactid benutzt werden.

### Beschreibung der Versuchsanordnung

In einer Pilotanlage werden ca. 2,6 kg/h eines Milchsäurepräpolymers kontinuierlich zu dampfförmigem Dilactid depolymerisiert. Die Brüden aus dem Reaktor sind ein Gemisch aus Dilactid, Wasser, Milchsäure, Lactoylmilchsäure und linearen Oligomeren der Milchsäure. Diese Brüden wurden in einem Dephlegmator teilkondensiert, so dass der Großteil des Wassers und ein Teil der Milchsäure dampfförmig bleiben. Dilactid, restliche Milchsäure und deren Oligomere bilden das Kondensat (Roh-Dilactid). Der Durchsatz beträgt ca. 2,5 kg/h.

Es werden die Carboxylendgruppen (Säure-Base-Titration) und der Meso-Dilactid-Gehalt (HPLC mit chiraler Säule) sowie der Schmelzpunkt (DSC) des Roh-Dilactids gemessen. Bei einer Probe werden typischerweise folgende Werte gemessen:
COOH = 250 mmol/kg,
Meso-Dilactid-Gehalt: 11,8 %,
Schmelzpunkt: 87°C.

Das Roh-Dilactid wird dann kontinuierlich einer Trennwandkolonne gemäß Fig. 1 zugeführt.

Am Kopf der Kolonne wird ein Gemisch aus Dilactid und den leichterflüchtigen Komponenten wie Wasser und Milchsäure und im Sumpf der Kolonne die Oligomere der Milchsäure und der Restgehalt an Dilactid entnommen. Das gereinigte Dilactid wird als Seitenstrom abgezogen.

Die Trennwandkolonne hat einen Durchmesser von 100 mm. Sie ist gefüllt mit Packungen, die eine spezifische Oberfläche von 750 m²/m³ haben. Die Höhe der Kolonne ohne Verdampfer- und Kondensatorteil beträgt 9,75 m. Über den beiden Trennwandhälften befindet sich ein magnetisch gesteuertes Pendel, das den Rückfluss auf die beiden Trennwandhälften verteilt. Das Teilungsverhältnis kann dabei stufenlos verstellt werden.

Im Sumpf der Kolonne befindet sich ein Heizer mit einer Heizleistung von 3 kW (entspricht 100 %).

### Beispiel 1

Bei konstantem Roh-Dilactid-Zulauf wird die Sumpftemperatur auf 160 °C geregelt. Es ergibt sich ein Druckverlust über die Kolonne von 6 mbar bei einem Kopfdruck von 30 mbar. Die Temperatur des Kühlmediums für den Kondensator wird auf 115 °C im Vorlauf gesetzt. Das Teilungsverhältnis beträgt 7:5.

Das Rein-Dilactid hat einen Durchsatz von ca. 1500 g/h.

Der Carboxylendgruppengehalt im Rein-Dilactid beträgt durchschnittlich 43 mmol/kg.

### Beispiel 2

Bei konstantem Roh-Dilactid-Zulauf wird die Sumpftemperatur auf 164 °C geregelt. Der Druck am Kopf der Kolonne wird auf 22 mbar geregelt. Es ergibt sich ein Druckverlust über die Kolonne von 10 mbar. Die Temperatur des Kühlmediums für den Kondensator wird auf 124 °C im Vorlauf gesetzt. Das Teilungsverhältnis beträgt 7:5.

Im Sumpf werden 764 g/h entnommen, bei einem Rein-Dilactid-Durchsatz von 1523 g/h. Am Kopf der Kolonne fallen 209 g/h an.

Der Carboxylendgruppengehalt im Rein-Dilactid beträgt nicht mehr als 12 mmol/kg.

### Beispiel 3

Die Einstellungen aus Beispiel 2 werden beibehalten bis auf den Druck am Kopf der Kolonne. Dieser wird auf 20 mbar gesenkt. Es ergibt sich ein Druckverlust von 9 mbar. Die Menge an dampfförmigem Kopfprodukt erhöht sich auf 277 g/h, im Sumpf werden 774 g/h entnommen und der Rein-Dilatid-Austrag beträgt 1525 g/h.

Der Carboxylendgruppengehalt im Rein-Dilactid beträgt nicht mehr als 5 mmol/kg.

### Beispiel 4

Die Trennwandkolonne wird um eine zusätzliche Seitenentnahme erweitert (s. Fig. 3), wobei die obere und untere Seitenentnahme im Trennwandbereich liegen. Die Bedingungen und Einstellungen sind ansonsten wie in Beispiel 2. Die aus der oberen Seitenentnahme abgezogene Dilactid-Fraktion hat einen Durchsatz von 400 g/h, einen Meso-Dilactid-Gehalt von 42 % und einen Carboxylendgruppengehalt von 17 mmol/kg.

Für die untere Dilactid-Fraktion werden folgende Werte gemessen:

| | |
|---|---|
| Durchsatz: | 1600 g/h |
| Meso-Dilactid-Gehalt: | 6 % |
| Carboxylendgruppengehalt: | 10 mmol/kg |

### Beispiel 5

Die Einstellungen aus Beispiel 4 werden beibehalten, nur dass die Entnahme der Meso-Dilactid-reichen Fraktion nun direkt unterhalb des Kondensators der Kolonne erfolgt, wie in Fig. 4 dargestellt. Die Fraktion hat einen Carboxylendgruppengehalt von 176 mmol/kg, einen Meso-Dilactid-Gehalt von 68 % und einen Durchsatz von 330 g/h.

Für die untere Dilactid-Fraktion werden folgende Werte gemessen:

| | |
|---|---|
| Durchsatz: | 1600 g/h |
| Meso-Dilactid-Gehalt: | 3 % |
| Carboxylendgruppengehalt: | 13 mmol/kg |

### Beispiel 6

Die Meso-Dilactid-arme Rein-Dilactid-Fraktion aus Beispiel 4 wird im Labor einer fraktionierten Kristallisation aus der Schmelze unterzogen. Dazu werden in einen 500 ml Glaskolben mit Doppelmantel und beheiztem Ablassventil 400 ml flüssiges Dilactid gefüllt, die Temperatur im Doppelmantel auf 70°C eingestellt und über Nacht bei dieser Temperatur gehalten. Am nächsten Morgen kann die nicht kristallisierte flüssige Fraktion von der kristallinen Fraktion getrennt werden werden. Die flüssige Fraktion weist einen Carboxylendgruppengehalt von 122 mmol/kg und einen Meso-Dilactid-Gehalt von 30 % auf.

Die kristalline Fraktion wird bei 110°C aufgeschmolzen und abgelassen. Es wird ein Carboxylendgruppengehalt von 12 mmol/kg und ein Meso-Dilactid-Gehalt von 2 % gemessen.

Die auskristallisierte Fraktion wird einer weiteren Kristallisationsstufe unterzogen. Das zum zweiten Mal krisallisierte Dilactid hat einen Meso-Dilactid-Gehalt von 0,4 % und einen Carboxylendgruppengehalt von 2 mmol/kg.

### Beispiel 7

Mit einer kommerziellen Software zur Berechnung verfahrenstechnischer Prozesse wird die Trennung der Meso-Dilactid-reichen Fraktion aus Beispiel 5 in ein Milchsäure-reiches Kopfprodukt, eine Meso-Dilactid-reiche Seitenfraktion und ein L,L-Dilactid-reiches Sumpfprodukt durch Rektifikation rechnerisch simuliert, was einer Ausführungsform gemäß Fig. 4 entspricht.

Die Dampfdruckkurven für L,L-Dilactid und Meso-Dilactid werden der DE 38 20 299 entnommen. Die Phasengleichgewichte werden mit der UNIFAC-Methode berechnet.

Die Rektifikationskolonne wird folgendermaßen spezifiziert:

| | |
|---|---|
| Kopfdruck: | 45 mbar |
| Druckverlust über die Kolonne: | 10 mbar |
| Temp. des Kondensats: | 145 °C |
| Anzahl. der theor. Böden: | 47 |
| Zulauf-Boden: | 23 |
| Boden des Seitenabzugs: | 8 |
| Temp. im Kolonnesumpf: | 166 °C |

Man erhält folgende Produktzusammensetzung:
Meso-Fraktion: 95 % Meso-Dilactid, Carboxylendgruppengehalt kleiner 20 mmol/kg,
L-Fraktion: 90 % L,L-Dilactid, 10 % Meso-Dialctid,
Kopfprodukt: 76 % Meso-Dilactid, Carboxylendgruppengehalt 2650 mmol/kg.

### Beispiel 8

Beispiel 8 beschreibt eine Ausführungsform, in der die Reinigung der Meso-Dilactid-reichen Fraktion aus der Reinigungsvorrichtung 1 in einer Rektifikationskolonne mit Trennwand erfolgt (siehe Figur 8).

Die Trennwandkolonne zur Rückgewinnung von L,L-Dilactid und zur Reinigung des Mesolactids wird wie folgt betrieben:

| | |
|---|---|
| 15 mbar | Kopfdruck |
| 10 mbar | Druckverlust über Kolonne |
| 123 °C | Kopf-Temperatur (Kondensationstemperatur) |
| 45 | Zahl der theoretischen Trennstufen |
| 15 | Zulaufboden |
| 31 | Seitenabzug auf Boden |
| 145 °C | Sumpftemperatur |

Die Kolonne ist mit Stoffaustauschpackungen vom Typ Mellapak der Firma Sulzer ausgerüstet. Der Rücklauf wird im Verhältnis 1:2 auf die Zulaufseite und die Seite der Produktabnahme verteilt. Der Zulauf hat eine Carboxylgruppenkonzentration von 150 mmol/kg und einen Mesolactidgehalt von 70 %. Der Seitenstrom aus dem gereinigten Mesolactid enthält noch 5 % L,L-Dilactid und hat Carboxylgruppen von 4 mmol/kg. Das Sumpfprodukt hat 24 % Mesolactid, es wird in die erste Reinigungsvorrichtung zurückgeführt. Das Kopfprodukt enthält 75 % Mesolactid und Carboxylgruppen von 2.700 mmol/kg.

### Beispiel 9

Beispiel 9 beschreibt die Herstellung des Poly-mesoLactids:

Mesolactid mit 5 % L,L-Dilactid wird in einer Menge von 9 kg/h aus einer Trennwandkolonne als Seitenstrom abgezogen und einem kontinuierlich betriebenen Rührkesselreaktor zugeführt. Der Gehalt an Carboxylgruppen beträgt 4 mmol/kg. In den Rührkessel wird neben dem Mesolactid als Katalysator Zinn(II)octoat in einer Menge zudosiert, die 300 ppm Zinn, bezogen auf die Masse des Polymers, entspricht.

Die Schmelze polymerisiert im Kessel bei einer Temperatur von 140 °C und einer Verweilzeit von 2 Stunden bis zu einem Umsatz des Mesolactids von 60 %. Ein Ankerrührer sorgt mit 150 U/min für die notwendige Vermischung. Die teilweise umgesetzte Schmelze verlässt den Rührkessel und geht in einen Rohrreaktor, der mit Einbauten zur Vergleichsmäßigung der Strömungsgeschwindigkeit über den Querschnitt ausgerüstet ist. Im Rohrreaktor steigt der Umsatz innerhalb von 4 Stunden auf 95 % am Ausgang bei einer Temperatur von 140°C. Stabilisierung und Entmonomerisierung geschehen in derselben Weise wie für die Polymerisation von L-Dilactid beschrieben. Dasselbe gilt für die Granulierung.

## Patentansprüche

1. Verfahren zur Herstellung eines bioabbaubaren, intermolekularen cyclischen Diesters einer alpha-Hydroxycarbonsäure der Formel I 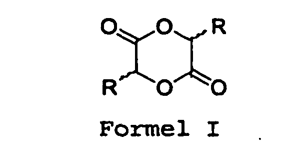 wobei R ausgewählt ist aus Wasserstoff oder linearen oder verzweigten aliphatischen Resten mit 1 bis 6 Kohlenstoffatomen durch zumindest teilweise Abtrennung aus Stoffgemischen, enthaltend den Diester der Formel I sowie die dazu korrespondierende alpha-Hydroxycarbonsäure der Formel II 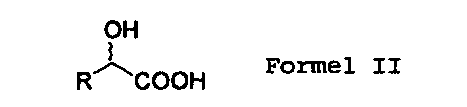 sowie lineare Dimere und Oligomere der korrespondierenden α-Hydroxycarbonsäure und Wasser durch folgende Schritte:
a) Einspeisen des Stoffgemisches in eine eine Trennwandkolonne aufweisende Reinigungsvorrichtung (1), die mindestens folgende untereinander angeordnete Bestandteile umfasst:
aa) kopfseitig mindestens einen Dephlegmator (2) sowie mindestens einen Abzug (3), bb) mindestens ein, den Durchmesser der Vorrichtung zumindest teilweise ausfüllendes Stoffaustauschpaket (4),
cc) eine Trennwandkolonne (5), die durch eine vertikale Trennwand (6) in zwei Zonen (7, 8) geteilt ist, wobei jede Zone (7, 8) mindestens zwei Stoffaustauschpakete (9) aufweist, die je durch einen Zwischenraum (10) voneinander getrennt sind, die erste Zone (7) (Vorfraktionierungszone) mindestens einen Zugang (11) zur Einspeisung des Stoffgemisches und die zweite Zone (8) (Hauptfraktionierungszone) mindestens einen Seitenabzug (12) zur Entnahme des gereinigten Produktes aufweist, und der mindestens eine Zugang (11) sowie der mindestens eine Seitenabzug (12) je im Bereich des mindestens einen Zwischenraumes (10) angeordnet sind,
dd) mindestens ein weiteres, den Durchmesser der Vorrichtung zumindest teilweise ausfüllendes Stoffaustauschpaket (13),
ee) sumpfseitig mindestens einen Verdampfer (14) sowie mindestens einen Abzug (3),
wobei das Längenverhältnis der Trennwandkolonne (5) zur Gesamtlänge der Reinigungsvorrichtung (1) 0,5 bis 0,9 beträgt,
b) Auftrennen des Stoffgemisches, wobei die Säure der Formel II in dampfförmigem Aggregatszustand die Kolonne verlässt und
c) Entnahme des gereinigten Diesters der Formel I über den mindestens einen Seitenabzug.

2. Verfahren nach vorhergehendem Anspruch, **dadurch gekennzeichnet, dass** der gereinigte Diester der Formel I in flüssigem Aggregatszustand entnommen wird.

3. Verfahren nach einem der vorhergehenden Ansprüche, **dadurch gekennzeichnet, dass** im Stoffgemisch mindestens ein weiterer Stoff, ausgewählt aus der Gruppe bestehend aus Wasser, korrespondierenden Oligomeren der alpha-Hydroxycarbonsäure der Formel III, 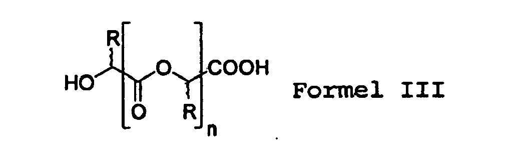 wobei n = 1 bis 10 ist und R gemäß Anspruch 1 definiert ist und/oder Mischungen hieraus, enthalten ist.

4. Verfahren nach einem der vorhergehenden Ansprüche, **dadurch gekennzeichnet, dass** der Gewichtsanteil des cyclischen Diesters der Formel I in dem der Reinigungsvorrichtung zugeführten Stoffgemisch mindestens 50 Gew.-%, bevorzugt mindestens 75 Gew.-%, besonders bevorzugt mindestens 80 Gew.-% beträgt.

5. Verfahren nach einem der vorhergehenden Ansprüche, **dadurch gekennzeichnet, dass** der cyclische Diester der Formel I Dilactid und die alpha-Hydroxycarbonsäure der Formel II Milchsäure ist, wobei nach erfolgter Entnahme des abgetrennten gereinigten Dilactids mindestens ein weiterer Trennungsschritt zur Separation von L- und Meso-Dilactid erfolgt.

6. Verfahren nach vorhergehendem Anspruch, **dadurch gekennzeichnet, dass** der mindestens eine weitere Trennungsschritt ausgewählt ist aus der Gruppe bestehend aus Rektifikation in einer Rektifikationskolonne, Rektifikation in einer eine Trennwandkolonne umfassenden Reinigungsvorrichtung und/oder Kristallisation.

7. Verfahren nach Anspruch 5, **dadurch gekennzeichnet, dass** gleichzeitig eine Auftrennung des Dilactids in eine Meso-Dilactid-reiche Fraktion und eine L-Dilactid-reiche Fraktion erfolgt, wobei die Meso-Dilactid-reiche Fraktion an mindestens einem ersten Seitenabzug und die L-Dilactid-reiche Fraktion an mindestens einem zweiten Seitenabzug entnommen wird, mit der Maßgabe, dass der erste Seitenabzug bezüglich des zweiten Seitenabzugs an der Reinigungsvorrichtung weiter kopfseitig angeordnet ist.

8. Verfahren nach vorhergehendem Anspruch, **dadurch gekennzeichnet, dass** der Gehalt des Meso-Dilactids in der L-Dilactid-reichen Fraktion maximal 10 Gew.-%, bevorzugt maximal 6 Gew.-%, besonders bevorzugt maximal 4 Gew.-% beträgt.

9. Verfahren nach einem der beiden vorhergehenden Ansprüche, **dadurch gekennzeichnet, dass** der Gehalt des L-Dilactids in der Meso-Dilactid-reichen Fraktion maximal 60 Gew.-%, bevorzugt maximal 50 Gew.-%, besonders bevorzugt maximal 40 Gew.-% beträgt.

10. Verfahren nach einem der Ansprüche 7 bis 9, **dadurch gekennzeichnet, dass** der Gehalt des Meso-Dilactids in der L-Dilactid-reichen Fraktion
durch anschließende Schmelzekristallisation weiter verringert wird.

11. Verfahren nach vorhergehendem Anspruch, **dadurch gekennzeichnet, dass** die durch Schmelzekristallisation abgetrennte, an Meso-Dilactid angereicherte Fraktion dem Stoffgemisch, das in die Trennwandkolonne (5) eingespeist wird, wieder zugesetzt wird.

12. Verfahren nach einem der vorhergehenden Ansprüche, **dadurch gekennzeichnet, dass** sich im Anschluss an mindestens einen der Seitenabzüge (12) mindestens eine weitere Reinigungsvorrichtung (15) anschließt.

13. Verfahren nach vorhergehendem Anspruch, **dadurch gekennzeichnet, dass** die weitere Reinigungsvorrichtung (15) mindestens folgende räumlich untereinander angeordnete Bestandteile umfasst:
a) kopfseitig mindestens einen Dephlegmator (2a) sowie mindestens einen Abzug (3a),
b) mindestens ein, den Durchmesser der Vorrichtung zumindest teilweise ausfüllendes Stoffaustauschpaket (4a),
c) eine Trennwandkolonne (5a), die durch eine vertikale Trennwand (6a) in zwei Zonen (7a, 8a) geteilt ist, wobei jede Zone (7a, 8a) mindestens zwei Stoffaustauschpakete (9a) aufweist, die je durch einen Zwischenraum (10a) voneinander getrennt sind, die erste Zone (7a) (Vorfraktionierungszone) mindestens einen Zugang, der mit mindestens einem Seitenabzug (12) der Trennwandkolonne (5) zur Einspeisung des Stoffgemisches und die zweite Zone (8a) (Hauptfraktionierungszone) mindestens einen Seitenabzug (19) zur Entnahme des gereinigten Produktes aufweist, und der mindestens eine Zugang sowie der mindestens eine Seitenabzug (19) je im Bereich des mindestens einen Zwischenraumes (10a) angeordnet sind,
d) mindestens ein weiteres, den Durchmesser der Vorrichtung zumindest teilweise ausfüllendes Stoffaustauschpaket (13a), sowie
e) sumpfseitig mindestens einen Verdampfer (14a) sowie mindestens eine mit dem Zugang (11) verbundene Rückführung (17").

14. Verfahren nach einem der vorhergehenden Ansprüche, **dadurch gekennzeichnet, dass** vor den Zugang (11) mindestens eine weitere Reinigungsvorrichtung (15) geschaltet ist, die bevorzugt ausgewählt ist aus der Gruppe bestehend aus Rektifikations- (16) und/oder Kristallisationsvorrichtung (18).

15. Verfahren nach einem der vorhergehenden Ansprüche, **dadurch gekennzeichnet, dass** der Gehalt des L-Dilactids und der Carboxylendgruppen in der Meso-Dilactid-reichen Fraktion durch anschließende Rektifikation in einer Rektifikationskolonne und/oder Rektifikation in einer eine Trennwandkolonne umfassenden Reinigungsvorrichtung weiter verringert wird, bevorzugt auf einen L-Dilactidgehalt von maximal 30 Gew.-%, weiter bevorzugt maximal 20 Gew.-%, besonders bevorzugt maximal 10 Gew.-%, insbesondere maximal 6 Gew.-% und eine Konzentration an Carboxylendgruppen von maximal 20 mmol/kg, weiter bevorzugt maximal 10 mmol/kg, besonders bevorzugt 5 mmol/kg, insbesondere maximal 2 mmol/kg.

16. Verfahren zur kontinuierlichen Herstellung von Polylactid mit einem meso-Lactidgehalt von mehr als 70 Gew.-%, ausgehend von einem Stoffgemisch enthaltend meso-pilactid, mit einer Polymerisationsvorrichtung (100) umfassend eine Reinigungsvorrichtung (1) gemäß Anspruch 1 bei dem zunächst in der Reinigungsvorrichtung (1) eine kontinuierliche Abtrennung des meso-Dilactids aus dem Stoffgemisch mit kontinuierlicher Entnahme des gereinigten meso-Dilactids aus der Reinigungsvorrichtung (1) erfolgt und im Anschluss eine Polymerisation durchgeführt wird.

17. Verfahren nach vorhergehendem Anspruch, **dadurch gekennzeichnet, dass**
a) die Polymerisation so gesteuert wird, dass das erhaltene Poly-Meso-Lactid eine molare Masse von 50.000 g/mol < Mₙ < 2.000.000 g/mol aufweist, und/oder
b) das Polylactid einen meso-Lactidgehalt von mehr als 70 Gew.-%, bevorzugt mehr als 90 Gew.-% aufweist, und/oder
c) bei der Polymerisation ein Katalysator zugesetzt wird.

18. Verwendung des Verfahrens nach einem der Ansprüche 1 bis 15 zur Reinigung von Dilactid, zur Herstellung von im Wesentlichen enantiomerenreinen L-Dilactid und/oder meso-Dilactid sowie des Verfahrens nach einem der Ansprüche 16 bis 17 bei der Herstellung von Poly-L-Lactid und Poly-Meso-Lactid.

## Claims

1. Method for producing a biodegradable, intermolecular cyclic diester of an alpha-hydroxycarboxylic acid of formula I 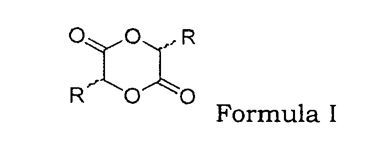 R being selected from hydrogen or linear or branched aliphatic radicals with 1 to 6 carbon atoms by at least partial separation from material mixtures containing the diester of formula I and also the alpha-hydroxycarboxylic acid, corresponding thereto, of formula II 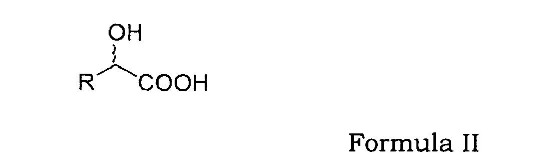 and also linear dimers and oligomers of the corresponding α-hydroxycarboxylic acids and water,
by means of the following steps:
a) feeding the material mixture into a cleaning device (1) which has a dividing wall column, which comprise at least the following components which are arranged from top to the bottom:
aa) at the top, at least one dephlegmator (2) and also at least one outlet (3),
bb) at least one mass transfer packing (4) which fills the diameter of the device at least partially,
cc) a dividing wall column (5) which is divided into two zones (7, 8) by a vertical dividing wall (6), each zone (7, 8) having at least two mass transfer packings (9) which are separated from each other respectively by a gap (10), the first zone (7) (prefractionation zone) having at least one inlet (11) for supplying the material mixture and the second zone (8) (main fractionation zone) having at least one side outlet (12) for removing the cleaned product, and the at least one inlet (11) and also the at least one side outlet (12) being located respectively in the region of the at least one gap (10),
dd) at least one further mass transfer packing (13) which fills the diameter of the device at least partially,
ee) on the sump side, at least one evaporator (14) and at least one outlet (3),
the length ratio of the dividing wall column (5) to the total length of the cleaning device (1) being 0.5 to 0.9,
b) separation of the material mixture, the acid of formula II leaving the column in a vaporous aggregate state and
c) removal of the cleaned diester of formula I via the at least one side outlet.

2. Method according to the preceding claim, **characterised in that** the cleaned diester of formula I is removed in a liquid aggregate state.

3. Method according to one of the preceding claims, **characterised in that**, in the material mixture, at least one further material is contained, selected from the group comprising water, corresponding oligomers of the alpha-hydroxycarboxylic acid of formula III, 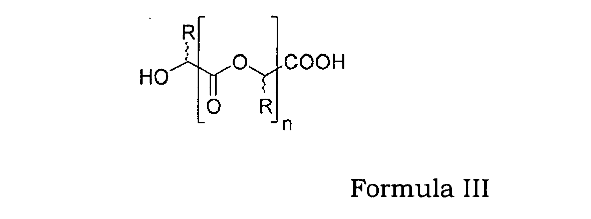 there being n = 1 to 10 and R being defined according to claim 1, and/or mixtures hereof.

4. Method according to one of the preceding claims, **characterised in that** the weight proportion of the cyclic diester of formula I in the material mixture supplied to the cleaning device is at least 50% by weight, preferably at least 75% by weight, particularly preferred at least 80% by weight.

5. Method according to one of the preceding claims, **characterised in that** the cyclic diester of formula I is dilactide and the alpha-hydroxycarboxylic acid of formula II is lactic acid, wherein after removal of the separated cleaned dilactide is effected, at least one further separation step for separation of L- and mesodilactide is effected.

6. Method according to the preceding claim, **characterised in that** the at least one further separation step is selected from the group comprising rectification in a rectification column, rectification in a cleaning device which includes a dividing wall column and/or crystallisation.

7. Method according to claim 5, **characterised in that** at the same time separation of the dilactide into a mesodilactide-rich fraction and an L-lactide-rich fraction is effected, the mesodilactide-rich fraction being removed at at least one first side outlet and the L-dilactide-rich fraction at at least one second side outlet, with the proviso that the first side outlet is disposed with respect to the second side outlet further towards the top side on the cleaning device.

8. Method according to the preceding claim, **characterised in that** the content of the mesodilactide in the L-dilactide-rich fraction is at most 10% by weight, preferably at most 6% by weight, particularly preferred at most 4% by weight.

9. Method according to one of the claims 7 or 8, **characterised in that** the content of the L-dilactide in the mesodilactide-rich fraction is at most 60% by weight, preferably at most 50% by weight, particularly preferred at most 40% by weight.

10. Method according to one of the claims 7 to 9, **characterised in that** the content of the mesodilactide in the L-dilactide-rich fraction is further reduced by subsequent melt crystallisation.

11. Method according to the preceding claim, **characterised in that** the fraction, which is separated by melt crystallisation and enriched in mesodilactide, is added again to the material mixture which is fed into the dividing wall column (5).

12. Method according to one of the preceding claims, **characterised in that**, subsequent to at least one of the side outlets (12), at least one further cleaning device (15) is connected.

13. Method according to one of the preceding claims, **characterised in that** the further cleaning device (15) comprises at least the following components which are arranged from top to bottom:
a) at the top, at least one dephlegmator (2a) and also at least one outlet (3a),
b) at least one mass transfer packing (4) which fills the diameter of the device at least partially,
c) a dividing wall column (5a) which is divided into two zones (7a, 8a) by a vertical dividing wall (6a), each zone (7a, 8a) having at least two mass transfer packings (9a) which are separated from each other respectively by a gap (10a), the first zone (7a) (prefractionation zone) having at least one inlet, with at least one side outlet (12) of the dividing wall column (5) for supplying the material mixture and the second zone (8a) (main fractionation zone) having at least one side outlet (19) for removing the cleaned product, and the at least one inlet and also the at least one side outlet (19) being disposed respectively in the region of the at least one gap (10a),
d) at least one further mass transfer packing (13a) which fills the diameter of the device at least partially,
e) on the sump side, at least one evaporator (14a) and at least one recirculation (17") which is connected to the inlet (11).

14. Method according to one of the preceding claims, **characterised in that** at least one further cleaning device (15), which is preferably selected from the group comprising rectification- (16) and/or crystallisation device (18), is connected before the inlet (11).

15. Method according to one of the preceding claims, **characterised in that** the content of the L-dilactide and of the carboxyl end groups in the mesodilactide-rich fraction is further reduced by subsequent rectification in a rectification column and/or rectification in a cleaning device which includes a dividing wall column, preferably to an L-dilactide content of at most 30% by weight, further preferred at most 20% by weight, particularly preferred at most 10% by weight, in particular at most 6% by weight, and a concentration of carboxyl end groups of at most 20 mmol/kg, further preferred at most 10 mmol/kg, particularly preferred 5 mmol/kg, in particular at most 2 mmol/kg.

16. Method for continuous production of polylactide with a mesolactide content of more than 70% by weight, starting from a material mixture containing mesodilactide, with a polymerisation device (100) containing a cleaning device (1), in which firstly, in the cleaning device (1), continuous separation of the mesodilactide from the material mixture is effected with continuous removal of the cleaned mesodilactide from the cleaning device (1) and, subsequently, a polymerisation is implemented.

17. Method according to the preceding claim, **characterised in that**
a) the polymerisation is controlled such that the obtained poly-mesolactide has a molar mass of 50,000 g/mol < Mn < 2,000,000 g/mol and/or
b) the polylactide has a mesolactide content of more than 70% by weight, preferably more than 90% by weight, and/or
c) that a catalyst is added during the polymerisation.

18. Use of the method according to one of the claims 1 to 15, for cleaning dilactide, for the production of essentially enantiomerpure L-dilactide and/or mesodilactide and according to the method to one of the claims 16 or 17 in the production of poly-L-lactide and poly-mesolactide.

## Revendications

1. Procédé pour la préparation d'un diester cyclique intermoléculaire biodégradable d'un acide alpha-hydroxycarboxylique répondant à la formule I 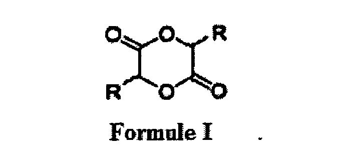 dans laquelle R est choisi parmi un atome d'hydrogène ou des radicaux aliphatiques linéaires ou ramifiés contenant de 1 à 6 atomes de carbone, par séparation au moins partielle à partir de mélanges de substances contenant le diester répondant à la formule I ainsi que l'acide alpha-hydroxycarboxylique qui y correspond, répondant à la formule II 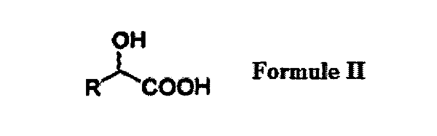 ainsi que des dimères et des oligomères linéaires de l'acide alpha-hydroxycarboxylique correspondant et de l'eau
en passant par les étapes suivantes consistant à :
a) introduire le mélange de substances dans un dispositif de purification (1) présentant une colonne à paroi de séparation, ledit dispositif comprenant au moins les constituants suivants, disposés les uns en dessous des autres :
aa) du côté de la tête, au moins un déflegmateur (2) et au moins une sortie (3) ;
bb) au moins un garnissage de métabolisme (4) qui remplit au moins en partie le diamètre du dispositif ;
cc) une colonne à paroi de séparation (5) qui est subdivisée en deux zones (7, 8) par une paroi de séparation verticale (6), chaque zone (7, 8) présentant au moins deux garnissages de métabolisme (9) qui sont séparés l'un de l'autre par un espace intermédiaire (10), la première zone (7) (zone de préfractionnement) présentant au moins une entrée (11) pour l'alimentation du mélange de substances et la deuxième zone (8) (zone de fractionnement principal) présentant au moins une sortie latérale (12) pour le prélèvement du produit purifié, et ladite au moins une entrée (11) ainsi que ladite au moins une sortie latérale (12) étant disposées respectivement dans la zone dudit au moins un espace intermédiaire (10) ;
dd) au moins un garnissage de métabolisme supplémentaire (13) qui remplit au moins en partie le diamètre du dispositif ;
ee) du côté du bas de colonne, au moins un évaporateur (14) et au moins une sortie (3) ;
le rapport de la longueur de la colonne à paroi de séparation (5) à la longueur totale du dispositif de purification (1) s'élevant de 0,5 à 0,9 ;
b) séparer le mélange de substances, l'acide répondant à la formule II quittant la colonne à l'état d'agrégat sous forme de vapeur, et
c) prélever le diester purifié répondant à la formule I via ladite au moins une sortie latérale.

2. Procédé selon la revendication précédente, **caractérisé en ce que** le diester purifié répondant à la formule I est prélevé à l'état d'agrégat liquide.

3. Procédé selon l'une quelconque des revendications précédentes, **caractérisé en ce que**, le mélange de substances contient au moins une substance supplémentaire choisie parmi le groupe constitué par de l'eau, des oligomères correspondants de l'acide alpha-hydroxycarboxylique répondant à la formule III 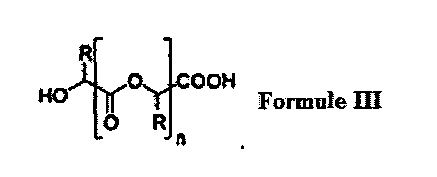 dans laquelle n = 1 à 10 et R est défini conformément à la revendication 1, et/ou leurs mélanges.

4. Procédé selon l'une quelconque des revendications précédentes, **caractérisé en ce que** la fraction pondérale du diester cyclique répondant à la formule I dans le mélange de substances acheminé au dispositif de purification représente au moins 50 % en poids, de préférence au moins 75 % en poids, de manière particulièrement préférée au moins 80 % en poids.

5. Procédé selon l'une quelconque des revendications précédentes, **caractérisé en ce que** le diester cyclique répondant à la formule I est un dilactide et l'acide alpha-hydroxycarboxylique répondant à la formule II est l'acide lactique, au moins une étape de séparation supplémentaire étant mise en oeuvre pour la séparation du L-dilactide et du méso-dilactide, après avoir procédé au prélèvement du dilactide purifié séparé.

6. Procédé selon la revendication précédente, **caractérisé en ce que** ladite au moins une étape de séparation supplémentaire est choisie parmi le groupe constitué par une rectification dans une colonne à paroi de séparation, une rectification dans un dispositif de purification comprenant une colonne à paroi de séparation et/ou une cristallisation.

7. Procédé selon la revendication 5, **caractérisé en ce qu'**on procède de manière simultanée à une séparation du dilactide pour obtenir une fraction riche en méso-dilactide et une fraction riche en L-dilactide, la fraction riche en méso-dilactide étant prélevée à au moins une première sortie latérale et la fraction riche en L-dilactide étant prélevée à au moins une deuxième sortie latérale, avec cette mesure que la première sortie latérale est disposée sur le dispositif de purification, plus près du côté de la tête que la deuxième sortie latérale.

8. Procédé selon la revendication précédente, **caractérisé en ce que** la teneur en méso-dilactide de la fraction riche en L-dilactide représente au maximum 10 % en poids, de préférence au maximum 6 % en poids, de manière particulièrement préférée au maximum 4 % en poids.

9. Procédé selon l'une quelconque des deux revendications précédentes, **caractérisé en ce que** la teneur en dilactide de la fraction riche en méso-dilactide représente au maximum 60 % en poids, de préférence au maximum 50 % en poids, de manière particulièrement préférée au maximum 40 % en poids.

10. Procédé selon l'une quelconque des revendications 7 à 9, **caractérisé en ce que** la teneur en méso-dilactide de la fraction riche en L-dilactide est soumise à une réduction supplémentaire via une cristallisation en fusion qui suit directement.

11. Procédé selon la revendication précédente, **caractérisé en ce que** la fraction enrichie en méso-dilactide séparée via la cristallisation en fusion est à nouveau ajoutée au mélange de substances qui est alimenté dans la colonne à paroi de séparation (5).

12. Procédé selon l'une quelconque des revendications précédentes, **caractérisé en ce que** au moins un dispositif de purification supplémentaire (15) se raccorde directement à au moins une des sorties latérales (12).

13. Procédé selon la revendication précédente, **caractérisé en ce que** le dispositif de purification supplémentaire (15) comprend au moins les constituants suivants disposés dans l'espace les uns en dessous des autres :
a) du côté de la tête, au moins un déflegmateur (2a) et au moins une sortie (3a) ;
b) au moins un garnissage de métabolisme (4a) qui remplit au moins en partie le diamètre du dispositif ;
c) une colonne à paroi de séparation (5a) qui est subdivisée en deux zones (7a, 8a) par une paroi de séparation verticale (6a), chaque zone (7a, 8a) présentant au moins deux garnissages de métabolisme (9a) qui sont séparés l'un de l'autre par un espace intermédiaire (10a), la première zone (7a) (zone de préfractionnement) présentant au moins une entrée, comprenant au moins une sortie latérale (12) de la colonne à paroi de séparation (5) pour l'alimentation du mélange de substances, et la deuxième zone (8a) (zone de fractionnement principal) présentant au moins une sortie latérale (19) pour le prélèvement du produit purifié, et ladite au moins une entrée ainsi que ladite au moins une sortie latérale (19) étant disposées respectivement dans la zone dudit au moins un espace intermédiaire (10a) ;
d) au moins un garnissage de métabolisme supplémentaire (13a) qui remplit au moins en partie le diamètre du dispositif ; et
e) du côté du bas de colonne, au moins un évaporateur (14a) et au moins un guidage en retour (17") relié à l'entrée (11).

14. Procédé selon l'une quelconque des revendications précédentes, **caractérisé en ce qu'**au moins un dispositif de purification supplémentaire (15) est monté en amont de l'entrée (11), ledit dispositif étant choisi de préférence parmi le groupe constitué par un dispositif de rectification (16) et/ou un dispositif de cristallisation (18).

15. Procédé selon l'une quelconque des revendications précédentes, **caractérisé en ce que** la teneur en L-dilactide et en groupes terminaux carboxyle dans la fraction riche en méso-dilactide fait l'objet d'une réduction supplémentaire via une rectification qui suit directement dans une colonne à paroi de séparation et/ou via une rectification dans un dispositif de purification comprenant une colonne à paroi de séparation, de préférence pour obtenir une teneur en L-dilactide au maximum de 30 % en poids, de manière plus préférée au maximum de 20 % en poids, de manière particulièrement préférée au maximum de 10 % en poids, en particulier au maximum de 6 % en poids et une concentration des groupes terminaux carboxyle au maximum de 20 mmol/kg, de manière plus préférée au maximum de 10 mmol/kg, de manière particulièrement préférée de 5 mmol/kg, en particulier au maximum de 2 mmol/kg.

16. Procédé pour la préparation en continu de polylactide possédant une teneur en méso-lactide supérieure à 70 % en poids, à partir d'un mélange de substances contenant du méso-dilactide, avec un dispositif de polymérisation (100) comprenant un dispositif de purification (1) selon la revendication 1, dans lequel on procède d'abord, dans le dispositif de purification (1), à une séparation en continu du méso-dilactide à partir du mélange de substances avec prélèvement en continu du méso-dilactide purifié à partir du dispositif de purification (1), avant de procéder à une polymérisation.

17. Procédé selon la revendication précédente, **caractérisé en ce que** :
a) on règle la polymérisation de telle sorte que le poly-méso-lactide que l'on obtient présente une masse molaire de 50.000 g/mol < Mₙ < 2.000.000 g/mol ; et/ou
b) le polylactide présente une teneur en méso-lactide supérieure à 70 % en poids, de préférence supérieure à 90 % en poids ; et/ou
c) on ajoute un catalyseur lors de la polymérisation.

18. Utilisation du procédé selon l'une quelconque des revendications 1 à 15, à des fins de purification de dilactide, pour la préparation d'un L-dilactide et/ou d'un méso-dilactide essentiellement pur du point de vue énantiomère, ainsi que du procédé selon l'une quelconque des revendications 16 à 17 lors de la préparation du poly-L-lactide et du poly-méso-lactide.
